# EUROPEAN PATENT APPLICATION

(11) **EP 1 637 782 A1**
(43) Date of publication of application: **22.03.2006**
(21) Application number: 05020564.0
(22) Date of filing: 21.09.2005
(51) Int. Cl.: F16J 15/34

(54) **Seal housing for a mechanical seal**

(30) Priority: 21.09.2004 GB 0420914
(71) Applicant: AES Engineering Ltd, Bradmarsh Business Park Rotherham S60 1BZ (GB)
(72) Inventor: Roddis, Alan James, Sheffield S35 2 YL (GB)
(74) Representative: Harrison Goddard Foote

(57) **Abstract**

A mechanical seal assembIy (100) comprising a seal housing having a first housing portion (800) and a second housing portion (900) and wherein the first housing portion is radially mounted in sealing relationship with the second housing portion; the second housing portion is axially mounted to extend substantially along the length of the mechanical seal assembly; and the first or second housing portion is operatively mounted in sealing relationship with a respective first stationary component (300a). If the first housing portion is operatively mounted in sealing relationship with the first stationary component, then the second housing portion may be operatively mounted in sealing relationship with a respective second stationary component (300b). Likewise, if the second housing portion is operatively mounted in sealing relationship with the first stationary component, then the first housing portion is operatively mounted in sealing relationship with a respective second stationary component.

## Description

### FIELD OF INVENTION

The invention relates to a mechanical seal for sealing fluid between rotating parts and stationary parts. The invention particularly relates to the seal housing of a mechanical seal.

### BACKGROUND INFORMATION

Mechanical seals comprise a "rotary" component that rotates with a shaft and a "stationary" component that is secured to the housing. The rotary component and stationary components are axially mounted and are urged together using biasing means, such as springs, magnets etc. A seal is formed when the respective seal faces of the rotary and stationary components form a sealing relationship or engagement with a sliding seal interface.

The faces of the rotary and stationary components are typically referred to as the "rotary seal face" and the "stationary seal face". The seal faces are usually annular or radial. The seal face is preferably a flat and smooth surface.

A contacting seal is formed when the seal faces mate or contact. A noncontacting seal is formed when the seal faces are arranged in sealing relationship and separated by a film of fluid. A seal is deemed to have failed if the seal faces are separated sufficiently for fluid to flow uncontrollably between the rotary and stationary components.

A mechanical seal having a spring-loaded rotary component is called a "rotary seal". Meanwhile, a mechanical seal having a spring-loaded stationary component is called a "stationary seal".

A mechanical seal with pre-assembled and pre-set components is conventionally called a "cartridge seal", whereas a mechanical seal that is build in-situ with individually despatched components is known as a "component seal".

A mechanical seal assembly may comprise one or more rotary and stationary components forming one or more seals. For example, a mechanical seal assembly may comprise a single seal, double or triple seals.

Mechanical seals are used in all types of industries to seal a variety of different process media and operate in numerous conditions. The area adjacent the process media is conventionally known as the "inboard" side of the seal whilst the region adjacent the atmospheric side of the seal is known as "outboard". For example, a mechanical seal may be used to seal submersible pumps that are commonly used in the water and waste industry. The inboard side of the mechanical seal on a submersible pump seals a process media and prevents it leaking from the pump. Conversely, the outboard side of the mechanical seal prevents motor oil, sealing grease, water, sewage etc. from entering the pump.

Mechanical seals also include a seal housing for encasing the rotary and stationary components. The housing is a rigid structure that supports and locates the sealing components with respect to the shaft of the pump. The housing is traditionally formed from two portions that are joined together axially at some point along the length of the mechanical seal. Since the housing and stationary component(s) are secured together in sealing relationship or engagement it is essential that the two portions of the housing are perfectly aligned with respect to one another. Unfortunately, it has been found that this is almost impossible to achieve in practice because it is difficult to perfectly mount and join the two portions and they invariably move when the shaft of a pump is in operation. The two housing portions may move radially or axially with respect to one another. Thus, the misalignment of the two housing portions translates to the seal face(s) of the stationary component(s). The stationary seal face(s) may be sufficiently misaligned such that the sealing relationship between the stationary and rotary components is compromised and even fails.

Barrier fluid may be circulated within the seal housing of the mechanical seal assembly in order to cool the seal faces of the stationary and rotary components. The barrier fluid is usually, though not always, at a higher pressure to the process fluid. Thus, barrier fluid may flow uncontrollably from the assembly if a seal fails.

The seal housing of the mechanical seal assembly is commonly secured or sealed to an equipment housing or pump housing. However, the securing or sealing relationship of the seal housing with respect to the equipment housing is compromised and may even fail if the two housing portions are misaligned.

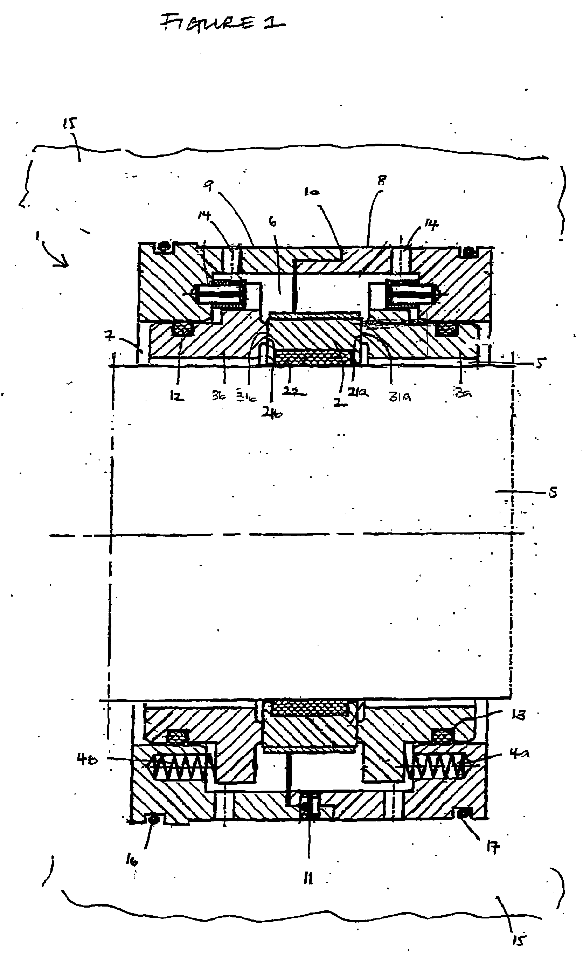

A conventional contact-type mechanical seal assembly is illustrated in Figure 1. The assembly is a double, stationary mechanical seal 1 comprising a rotary component 2 and two stationary components (first stationary component 3a, and second stationary component 3b). The first stationary component 3a is arranged axially on the inboard side of the rotary component and the second stationary component 3b is arranged axially on the outboard side of the rotary component. The stationary components are biased towards the rotary component using spring-like members 4a, 4b. A first stationary seal face 31 a of the first stationary component 3a forms a sliding seal interface with the first rotary seal face 21 a that prevents process media 5 from escaping from the pump. Likewise, a second stationary seal face 31 b of the second stationary component 3b forms a sliding seal interface with the second rotary seal face 21 b that prevents barrier fluid 6, used for cooling the mechanical seal, from escaping to the outboard area (7).

The components and their respective seal faces have an outer circumferential edge or outer diameter (OD) and an inner circumferential edge or inner diameter (ID).

The rotary component is mounted in sealing contact with the shaft S. An elastomer 22 is arranged between the rotary component and shaft to help form a seal between them.

The mechanical seal assembly comprises a seal housing for securing and locating the sealing components with respect to the shaft S. The seal housing comprises two portions 8, 9 that are separable at a centrally located junction 10 along the axial length of the mechanical seal assembly. The two portions are held together using split pins 11.

The seal housing is arranged such that a seal interface forms between at least a part of the inner diameter of the first housing portion 8 and at least a part of the outer diameter of the first stationary component 3a and a seal interface also forms between at least part of the inner diameter of the second housing portion 9 and at least a part of the outer diameter of the second stationary component 3b. Elastomers 12, 13 are arranged between the outer diameter of stationary components and the inner diameter of the housing portions to help form and maintain the seal interfaces. In a double mechanical seal of this particular design, the distance between the seal interfaces of the housing portions 8, 9 and stationary components 3a, 3b is commonly called the hydraulic balance diameter. When the housing portions are perfectly aligned, the hydraulic balance diameter is "balanced" and the seal interfaces between the housing portions, stationary components and rotary component are maintained. However, if the housing portions are misaligned due to imperfect mounting and/or movement then the seal interfaces between the housing portions and stationary components are deleteriously affected. The hydraulic balance diameter is thereby "unbalanced" and the misalignment of the housing portions is translated to the first and second stationary seal faces. Hence, the seal interfaces between the stationary seal faces and rotary seal faces are compromised and may even fail. Thus, barrier fluid and/or process fluid may leak into restricted areas. For example, the first housing may be misaligned such that it is projected axially in a direction towards the first stationary seal face 31a and the second housing is therefore projected axially in a direction away from the second stationary seal face 31b. Thus, the first stationary seal face and first rotary seal face are pushed closer together and the second stationary seal face and second rotary seal face are pulled further apart. The second stationary seal face and second rotary seal face may be separated sufficiently for the sliding seal interface to be compromised and even fail such that high-pressure barrier fluid flows from the mechanical seal assembly in an uncontrolled manner to the outboard area 7.

Barrier fluid is used to cool the mechanical seal. This particular mechanical seal assembly is arranged and configured such that barrier fluid enters and exits the housing through one or more orifices 14.

The seal housing is further sealed to an equipment or pump housing 15. Elastomers 16, 17 are used to help form the seal. However, this seal is also compromised and may even fail if the housing portions are misaligned.

### STATEMENTS OF INVENTION

Embodiments of the invention seek to counteract the effects of seal housing misalignment Embodiments of the invention seek to overcome the sliding seal interface problems between the stationary and rotary components caused by housing misalignment. Embodiments of the invention also seek to overcome the seal/pump housing sealing problems caused by seal housing misalignment.

According to a first aspect of the invention there is provided a mechanical seal assembly comprising a seal housing having a first housing portion and a second housing portion wherein the first housing portion is radially mounted in sealing relationship with the second housing portion; the second housing portion is axially mounted to extend substantially along the length of the mechanical seal assembly; and the first or second housing portion is operatively mounted in sealing relationship with a respective first stationary component

Preferably, the first or second housing portion is operatively mounted such that at least a part of the inner diameter of the first housing portion forms a sealing relationship with at least a part of the outer diameter of the first stationary component.

The inner diameter of the first or second housing portion optionally comprises a stepped section and the outer diameter of the first stationary component comprises a corresponding stepped section such that the operatively mounted first housing portion is slidable with respect to the first stationary component and a sealing relationship is formable between at least a part of the stepped section of the first housing portion and at least a part of the stepped section of the first stationary component in accordance with hydraulic pressure. Thus, the seal interfaces formed between first housing portion and stationary component is able to vary in accordance with the hydraulic pressure of the mechanical seal assembly such that a sealing relationship or engagement is formed and/or maintained.

If the first housing portion is operatively mounted in sealing relationship with the first stationary component, then the second housing portion may also be operatively mounted in sealing relationship with a respective second stationary component.

Hence, it is preferable that the first and second housing portions are operatively mounted such that at least a part of the inner diameter of the first and second housing portions form a sealing relationship with at least a part of the outer diameter of the respective first and second stationary components.

Again, the inner diameter of the first and second housing portion optionally comprises a stepped section and the outer diameter of the respective first and second stationary components comprises a corresponding stepped section such that the operatively mounted first and second housing are slidable with respect to the respective first and second stationary components and a sealing relationship is formable between at least a part of the stepped section of the first and second housing portions and at least a part of the stepped section of the respective first and second stationary components in accordance with hydraulic pressure. Accordingly, the seal interfaces formed between the first housing portion and first stationary component and the second housing portion and the second stationary component are able to vary in accordance hydraulic pressure of the mechanical seal such that the sealing relationships or engagements are formed and/or maintained.

Alternatively, if the second housing portion is operatively mounted in sealing relationship with the first housing portion, then the first housing portion may also be operatively mounted in sealing relationship with a respective second stationary component.

Preferably, the first and second housing portions are operatively mounted such that at least a part of the inner diameter of the first and second housing portions form a sealing relationship with at least a part of the outer diameter of the respective second and stationary components.
Furthermore, the inner diameter of the first and second housing portion optionally comprises at stepped section and the outer diameter of the respective second and first stationary components comprises a corresponding stepped section such that the operatively mounted first and second housing are slidable with respect to the respective second and first stationary components and a sealing relationship is formable between at least a part of the stepped section of the first and second housing portions and at least a part of the stepped section of the respective second and first stationary components in accordance with hydraulic pressure. Accordingly, the seal interfaces formed between the first housing portion and second stationary component and the second housing portion and the first stationary component are able to vary in accordance hydraulic pressure of the mechanical seal such that the sealing relationships or engagements are formed and/or maintained.

The first housing portion may be removeably mounted with respect to the second housing portion.

The mechanical seal assembly may optionally comprise a pumping ring for pumping barrier fluid in and out of the seal housing. The pumping ring is preferably mounted to a rotary component, which is further mounted to a rotatable shaft, such that the pumping ring pumps barrier fluid as the shaft rotates.

### BRIEF DESCRIPTION OF THE DRAWINGS

For a better understanding of the present invention and how it may be carried into effect, reference shall now be made by way of example to the accompanying drawings in which:
Figure 1 depicts a cross-sectional view of a conventional mechanical seal assembly;
Figure 2 depicts a cross-sectional view of a first embodiment of a mechanical seal assembly according to the invention;
Figure 3 depicts a partial cross-sectional view of a second embodiment of a mechanical seal assembly according to the invention;
Figure 4 depicts a partial cross-sectional view of a third embodiment of a mechanical seal assembly according to the invention.

### DETAILED DESCRIPTION OF THE INVENTION

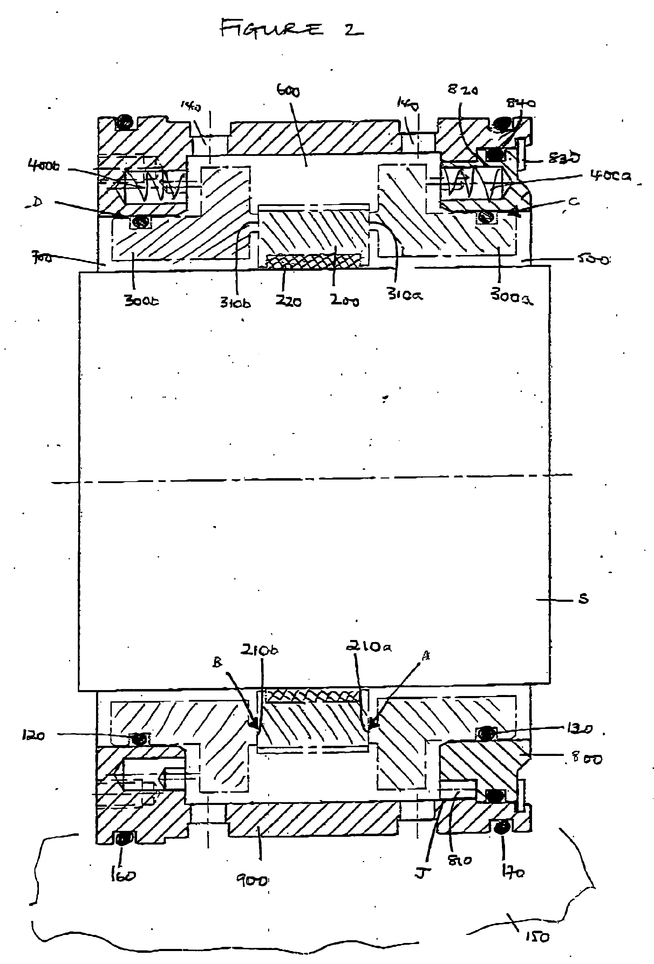

As with Figure 1, Figure 2 depicts a double, stationary, contact-type mechanical seal assembly 100. The assembly comprises a rotary component 200 having a first rotary seal face 210a facing the inboard side of the assembly and a second rotary seal face 210b facing the outboard side of the assembly. The rotary component 200 is mounted axially in sealing relationship with a shaft S such that it is rotates as the shaft rotates. An elastomer 220 is mounted between the rotary component and shaft to help form a seal. The assembly also comprises a first stationary component 300a having a first stationary seal face 310a and a second stationary component 300b having a second stationary seal face 310b. The first and second stationary components are mounted axially on either side of the rotary component such that the first stationary seal face is adjacent the first rotary seal face and the second stationary seal face is adjacent the second rotary seal face.

The first stationary component 300a is biased towards the inboard side of the rotary component 200 by a spring-like member 400a such that a sealing relationship forms between the first stationary seal face 310a and the first rotary seal face 210a. The second stationary component 300b is biased towards the outboard side of the rotary component 200 by a spring-like member 400b such that a sealing relationship forms between the second stationary seal face 310b and the second rotary seal face 210b. The sealing engagement of the first stationary and rotary seal faces produces a sliding seal interface A that prevent process fluid 500 from escaping from the inboard side of the mechanical seal assembly. The sealing engagement of the second stationary and rotary seal faces produces a sliding seal interface B that prevent barrier fluid 600 from escaping from the mechanical seal assembly to the outboard area 700 and also prevents the atmosphere from entering the mechanical seal assembly.

The mechanical seal assembly comprises a seal housing for securing and locating the sealing components with respect to the shaft. The seal housing comprises two portions, a first housing portion 800 and a second housing portion 900. The first housing portion 800 is arranged radially such that the first and second housing portions are radially separable at junction J. The second housing portion 900 is arranged to extend axially and substantially along the length of the mechanical seal assembly. The first and second housing portions are preferably releasably secured together. In this particular embodiment the first and second housing portions are releasably secured using one or more drive means 810, shoulder 820 and circlip 830. The housing portions may be further or alternatively secured using one or more screws or other conventional removable connecting means. An elastomer 840 is mounted between the first and second housing portions to help form a seal.

As with the housing for the conventional double mechanical seal depicted in Figure 1, the first housing of the embodiment illustrated in Figure 2 is mounted in sealing relationship or engagement with the first stationary component and the second housing is mounted in sealing relationship or engagement with the second stationary component. More specifically, a seal interface C forms between at least a part the inner diameter of the first housing portion and at least a part of the outer diameter of the first stationary component and a seal interface D forms between at least a part the inner diameter of the second housing portion and at least a part of the outer diameter of the second stationary component The housing portions are mounted and configured to form a sealing relationship with the stationary components such that the mechanical seal assembly is "balanced" and the sliding seal interfaces between the stationary and rotary components are maintained.

Elastomers 120, 130 may also be mounted between the housing portions and stationary components to help form the seal interface.

It is preferable that the housing portions are perfectly aligned during the operation of the mechanical seal. However, the housing portions may be misaligned due to imperfect mounting and/or movement. Nevertheless, the first and second housing portions of the present invention are specifically mounted and configured such that any misalignment does not have as detrimental an effect as the misalignment between conventional axially separable housing portions. By mounting and configuring the housing portions such that they are radially separable and the second housing portion extends axially, substantially along the length of the mechanical seal assembly, the housing portions, stationary components and rotary components remain in sealing engagement and the seal interfaces are substantially maintained, even when the housing portions are misaligned with respect to one another. The housing of the present invention is designed to minimise and even prevent the translation of any misalignment of the housing portions to the stationary components.

The seal housing of the mechanical seal assembly is also arranged in sealing relationship or engagement with equipment/pump housing 150. It can be seen in Figure 2 that a sealing relationship forms between the outer diameter of the second housing portion (900) and inner diameter of the equipment housing 150. Elastomers 160, 170 are mounted between the first housing portion and equipment housing to help form a seal. By mounting and configuring the first and second housing portions so that they are radially separable and the second housing portion extends axially substantially along the length of the mechanical seal assembly, the second housing portion and equipment housing remain in sealing engagement and the seal interface is substantially maintained even when the housing portions are misaligned with respect to one another. Thus, the housing of the present invention has also been designed to minimise or counteract the detrimental effects of misalignment on the sealing relationship between the housing and the equipment/pump housing 150.

It will be appreciated by a person skilled in the art that the first housing portion may alternatively be arranged in sealing relationship or engagement with the outboard stationary component and the second housing portion may be arranged in sealing relationship with the inboard stationary component

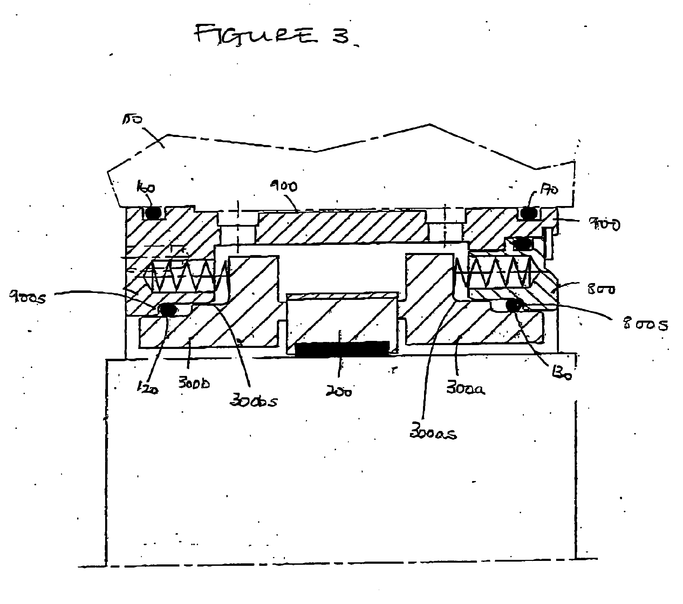

Figure 3 relates to a second embodiment of the invention. Figure 3 depicts a partial view of a double, stationary, contact-type mechanical seal assembly that comprises the same rotary and stationary component arrangement as the first embodiment of the invention. The mechanical seal assembly also comprises a seal housing comprising a first portion that is mounted to axially extend substantially along the length of the assembly and a second portion that is radially mounted and releasably secured to the first portion.

As explained above, a mechanical seal assembly is deemed to be "balanced" when the housing portions are mounted and configured in sealing relationship or engagement with the stationary components such that the sliding seal interfaces between the stationary seal faces and rotary seal faces are maintained. The "balancing" location and configuration of the housing portions with respect to the stationary components is determined by hydraulic pressures. The hydraulic pressures of a mechanical seal assembly include the barrier fluid pressure and process fluid pressure. Thus, it is essential that the housing portions are mounted and configured with respect to the stationary components in accordance with the hydraulic pressures such that a balancing sealing relationship may be formed between the respective housing portions and stationary components. For example, the balancing sealing interfaces between the housing portions and stationary components when the barrier fluid is at a higher pressure to the process fluid are different to the balancing sealing interfaces required when the process fluid is at a higher pressure to the barrier fluid.

Thus, this particular embodiment the invention has been designed such that the seal interfaces between housing portions and respective stationary components are able to vary in accordance with hydraulic pressure such that a sealing relationship or engagement is formed and/or maintained.

It can be seen in Figure 3 that the inner diameters of the first and second housing portions 800, 900 have been adapted to include a stepped section 800s, 900s. Likewise, the outer diameters of the stationary components 300a, 300b have been adapted to include a corresponding stepped section 300as, 300bs. The first housing portion and first stationary component are mounted and configured such that at least a part of the respective stepped sections form a sealing relationship-Likewise, the second housing portion and second stationary portion are mounted and configured such that at least a part of the respective stepped sections form a sealing relationship.

By stepping the inner diameters of the housing portions and the corresponding outer diameters of the stationary components, the housing portions are able to move, for example slide, with respect to the stationary components in accordance with hydraulic pressure. Thus, the housing portions are adjustable to ensure a balancing sealing relationship or engagement is formed. Furthermore, the sealing interfaces are able to change such that a balancing sealing relationship or engagement is maintained if the hydraulic pressure varies.

Additionally, the elastomers 120, 130 held radially captive between the housing portions and stationary components are allowed to float axially in order to help form and maintain a sealing relationship as and when the mechanical seal assembly is balanced or re-balanced in accordance with hydraulic pressure.

It will be appreciated that the first and second housing portions may be alternatively arranged such that the first housing portion is operatively mounted such that it can slide and form a sealing relationship with an outboard stationary component and the second housing component is operatively mounted such that it can slide and form a sealing relationship with an inboard stationary component.

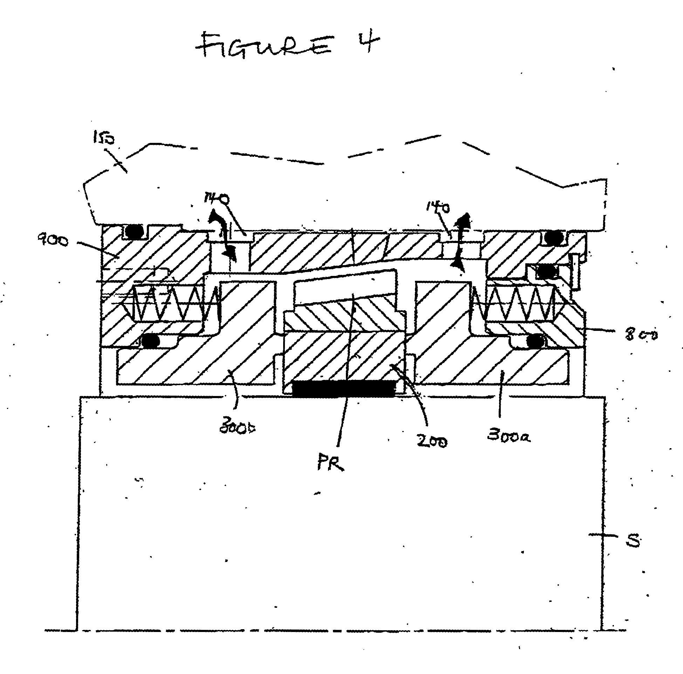

Figure 4 relates to a third embodiment of the invention. Figure 4 depicts a partial cross-sectional view of a double-stationary, contact-type mechanical seal assembly that comprises the same rotary component, stationary component and seal housing arrangement as the second embodiment of the invention. However, the third embodiment of the invention further comprises a pumping ring PR. The pumping ring is used to pump barrier fluid in and out of the mechanical seal assembly. The pumping ring is attached to the rotary component 200 such that, as the shaft S rotates, the pumping ring is able to draw fluid in through one or more inlet orifices and expel fluid out through one or more outlet orifices. In the embodiment depicted in Figure 4, the orifices 140 are formed in the first portion of the seal housing. The seal faces of the stationary and rotary components are cooled more efficiently and the seal life is subsequently extended by using the pumping ring to circulate the barrier fluid.

Those skilled in the art will appreciate that the present invention may be embodied in many different forms without departing from the scope of the claims. For example, the invention may relate to a mechanical seal assembly having one or more rotary components and one or more stationary components. Thus, invention may be incorporated as part of a mechanical seal assembly comprising a single seal, double or triple seals. If the mechanical seal assembly comprises only a single seal, then stationary component may be arranged on either the inboard or outboard side of the assembly and, depending on the arrangement of the housing portions, either the first housing portion or second housing portion may be mounted in sealing relationship with the stationary component. If the mechanical seal assembly comprises a double or triple seal, then depending on the arrangement of the stationary components, only one stationary component may be mounted in sealing relationship with either the first housing portion or second housing portion or alternatively outboard and inboard stationary components may be mounted in sealing relationship with the first and second housing portions. The invention may further relate to a rotary or stationary, cartridge or component mechanical seal assembly. Therefore, the invention must not be construed as being limited to the embodiments described herein.

Throughout the description and claims of this specification, the words "comprise" and "contain" and variations of the words, for example "comprising" and "comprises", means "including but not limited to", and is not intended to (and does not) exclude other moieties, additives, components, integers or steps.

Features, integers or characteristics described in conjunction with a particular aspect, embodiment or example of the invention are to be understood to be applicable to any other aspect, embodiment or example described herein unless incompatible therewith.

## Claims

1. A mechanical seal assembly comprising a seal housing having a first housing portion and a second housing portion and **characterised in that**:
the first housing portion is radially mounted in sealing relationship with the second housing portion;
the second housing portion is axially mounted to extend substantially along the length of the mechanical seal assembly; and
the first or second housing portion is operatively mounted in sealing relationship with a respective first stationary component

2. A mechanical seal assembly according to claim 1, wherein the first or second housing portion is operatively mounted such that at least a part of the inner diameter of the first housing portion forms a sealing relationship with at least a part of the outer diameter of the first stationary component.

3. A mechanical seal assembly according to claim 2, wherein the inner diameter of the first or second housing portion comprises a stepped section and the outer diameter of the first stationary component comprises a corresponding stepped section such that the operatively mounted first housing portion is slidable with respect to the first stationary component and a sealing relationship is formable between at least a part of the stepped section of the first housing portion and at least a part of the stepped section of the first stationary component in accordance with hydraulic pressure.

4. A mechanical seal assembly according to claim 1, wherein when the first housing portion is operatively mounted in sealing relationship with the first stationary component, the second housing portion is operatively mounted in sealing relationship with a respective second stationary component

5. A mechanical seal assembly according to claim 4, wherein the first and second housing portions are operatively mounted such that at least a part of the inner diameter of the first and second housing portions form a sealing relationship with at least a part of the outer diameter of the respective first and second stationary components.

6. A mechanical seal assembly according to any of claims 5, wherein the inner diameter of the first and second housing portion comprises a stepped section and the outer diameter of the respective first and second stationary components comprises a corresponding stepped section such that the operatively mounted first and second housing are slidable with respect to the respective first and second stationary components and a sealing relationship is formable between at least a part of the stepped section of the first and second housing portions and at least a part of the stepped section of the respective first and second stationary components in accordance with hydraulic pressure.

7. A mechanical seal assembly according to claim 1, wherein when the second housing portion is operatively mounted in sealing relationship with the first stationary component, the first housing portion is operatively mounted in sealing relationship with a respective second stationary component.

8. A mechanical seal assembly according to claim 7, wherein the first and second housing portions are operatively mounted such that at least a part of the inner diameter of the first and second housing portions form a sealing relationship with at least a part of the outer diameter of the respective second and first stationary components.

9. A mechanical seal assembly according to any of claims 8, wherein the inner diameter of the first and second housing portion comprises a stepped section and the outer diameter of the respective second and first stationary components comprises a corresponding stepped section such that the operatively mounted first and second housing are slidable with respect to the respective second and first stationary components and a sealing relationship is formable between at least a part of the stepped section of the first and second housing portions and at least a part of the stepped section of the respective second and first stationary components in accordance with hydraulic pressure.

10. A mechanical seal assembly according to and preceding claim wherein the first housing portion is removeably mounted with respect to the second housing portion.

11. A mechanical seal assembly according to any preceding claim, further comprising a pumping ring for pumping barrier fluid in and out of the seal housing.

12. A mechanical seal assembly according to 11, wherein the pumping ring is mounted to a rotary component, which is further mounted to a rotatable shaft, such that the pumping ring pumps barrier fluid as the shaft rotates.

13. A mechanical seal assembly comprising:
(i) a stationary component having a region defining an outer circumferential surface;
(ii) a first housing portion having a region defining an inner circumferential surface and a region defining an outer circumferential surface;
(iii) a second housing portion having a region defining a first inner circumferential surface and a region defining a second inner circumferential surface, the second housing portion being of unitary construction with respect to the axial dimension of the mechanical seal assembly; and wherein
the outer circumferential surface of the first housing portion is arranged in sealing relationship with the first inner circumferential surface of the second housing portion, and
the inner circumferential surface of the first housing portion or the second inner circumferential surface of the second housing portion is arranged in sealing relationship with the outer circumferential surface of the first stationary seal component
